# EUROPÄISCHE PATENTANMELDUNG

(11) **EP 0 750 432 A1**
(43) Veröffentlichungstag der Anmeldung: **27.12.1996**
(21) Anmeldenummer: 95109855.7
(22) Anmeldetag: 23.06.1995
(51) Int. Cl.: H04Q 3/00

(54) **Verfahren zur Interaktion eines Teilnehmers mit einem intelligenten Netz**

(71) Anmelder: SIEMENS AKTIENGESELLSCHAFT, 80333 München (DE)
(72) Erfinder: Zygan-Maus, Renate, Dr.rer.nat., D-81477 München (DE)

(57) **Zusammenfassung**

Interaktive IN-Verbindungen erfordern bisher IN-spezifische Prozeduren sowohl in der steuernden Komponente (d.h. dem SCP) und der gesteuerten Komponente (d.h. dem Intelligent Peripheral IP), als auch im IN-Zugangsknoten (d.h. dem SSP). Dadurch, daß ein IP einem Teilnehmer gleich an das intelligente Netz angeschlossen wird und das IP zur Durchführung der Interaktion von einem zentralen Netzknoten (SCP) über eine separate physikalische Kommunikationsschnittstelle gesteuert wird, entfallen diese IN-spezifischen Prozeduren.

## Beschreibung

Ein Intelligentes Netz (kurz IN) soll es einem Netzbetreiber, ermöglichen, neue Dienste (Services) rasch und problemlos einzuführen, ohne dafür in jedem Netzknoten Eingriffe in die Anlagenprogrammsysteme vornehmen zu müssen. Die genannten Eingriffe werden deshalb in einem IN auf möglichst wenige zentrale Netzknoten, die sogenannten Service Control Points (kurz SCP) beschränkt, die an zentraler Stelle mit den Merkmalen der neuen Dienste, der sogenannten Dienstlogik, ausgerüstet werden und dann in einer Art "Fernsteuerung" die einzelnen Netzknoten in die Lage versetzen, die neuen Dienste auszuführen.

Die genannte Fernsteuerung` erfordert allerdings entsprechende Trigger- und Eingriffspunkte in den ferngesteuerten Netzknoten. Ferngesteuerte Netzknoten des IN werden im folgenden als Dienst-Zugangsknoten oder Service Switching Points (kurz SSP) bezeichnet. Sie sind direkt oder über ein Signalisierungsnetz wie beispielsweise das Signalisierungsnetz CCS7 mit einem Service Control Point verbunden.

Ein Ruf zu einem Service des intelligenten Netzes (im folgenden kurz IN-Service genannt) kann von einem normalen, d.h. nicht von einem SCP ferngesteuerten, Netzknoten zunächst zu einem Service Switching Point SSP geroutet werden. Anhand der gewählten Nummer und/oder des Service Codes bestimmt der Service Switching Point, welcher Service Control Point SCP die diesem Service entsprechende Dienstelogik enthält und sendet anschließend zu diesem Service Control Point eine Anfrage, wie er den Ruf zu behandeln hat. Nachdem der SCP die Anfrage untersucht hat, sendet er eine Antwort zum Service Switching Point, die Informationen beinhaltet, die dieser zur weiteren Behandlung des Rufes benötigt.

Für viele Dienste in intelligenten Netzen ist nun ein interaktiver Dialog des IN mit dem Dienstenutzer (Service User) erforderlich. Für die Abwicklung dieses Dialogs über Nutzkanäle werden spezielle periphere Einrichtungen, sog. Intelligent Peripherals (kurz IP), verwendet, die über IN-spezifische Schnittstellen (d.h. keine normale Teilnehmerschnittstellen) an SSPs angeschlossen sind und von der Dienstelogik, die im Service Control Point, kurz SCP, des intelligenten Netzes enthalten ist, gesteuert werden.

Die bisher verwendeten Verfahren erfordern IN-spezifische Prozeduren sowohl in der steuernden Komponente (d.h. dem SCP) und der gesteuerten Komponente (d.h. dem Intelligent Peripheral), als auch im SSP. Darüber hinaus sind die erforderlichen Prozeduren unterschiedlich je nachdem, ob der Intelligent Peripheral an demselben SSP angeschlossen ist, an dem der IN-Ruf getriggert wurde oder an einem anderen SSP.

Die bisher genannten Verfahren haben somit zur Folge, daß die derzeitigen IN-Implementierungen bereits für Punkt-zu-Punkt-Verbindungen sehr komplex sind. Geplante IN-Implementierungen für Mehrpunkte-Verbindungen werden dadurch noch erheblich schwieriger.

Für Punkt-zu-Punkt-Verbindungen kommen im SSP bisher zwei IN-Prozeduren zur Anwendung, nämlich die sog. "Relay-Prozedur" für den Fall, daß der intelligente Peripheral am triggernden SSP angeschlossen ist und die sog. "Assist-Prozedur" für den Fall, daß der Intelligent Peripheral remote ist, d.h. nicht an dem triggernden SSP angeschlossen ist (vgl. dazu auch ETS 300 374-1 (ETSI Core INAP), Kapitel 7.3.5.1 - 7.3.5.4).

Die Relay-Prozedur beinhaltet folgende INAP-Operationen: ConnectToResource, PlayAnnouncement, SpecializedResourceReport, PromptAndCollectUserInformation, DisconnectForwardConnection.

Die Assist-Prozedur beinhaltet folgende INAP-Operationen: EctablishTemporaryConnection, AssistRequestInstructions, PlayAnnouncement, SpecializedResourceReport, PromptAndCollectUserInformation, DisconnectForwardConnection.

Die genannten erforderlichen INAP-Operationen für Punkt-zu-Punkt-Verbindungen verdeutlichen die Komplexität des bisherigen Verfahrens.

Der Erfindung liegt die Aufgabe zugrunde, ein Verfahren anzugeben, durch das Implementierungen für IN-Verbindungen, insbesondere für komplexe IN-Verbindungen, stark vereinfacht werden und ein IP anzugeben, das mit einem SCP nach dem genannten Verfahren zusammenwirkt.

Diese Aufgabe wird durch ein Verfahren gemäß Anspruch 1 bzw. ein Intelligent Peripheral gemäß Anspruch 2 gelöst.

Durch die erfindungsgemäße Lösung werden gegenüber den bisher standardisierten Verfahren (ETSI Core INAP, ITU-T Empfehlung Q.1218) folgende Vereinfachungen erreicht:
- an der SSP-SCP-Schnittstelle entfallen 7 INAP-Operationen (ConnectToResource, EstablishTemporaryConnection, AssistRequestInstructions, DisconnectForwardConnection, PlayAnnouncement, PromptAndCollectUserInformation, SpecializedResourceReport; siehe ETSI Core INAP, Kap. 6.1),
- die IN-Protokollmaschine (Finite State Machine FSM) für den initialisierenden SSP reduziert sich von fünf Zuständen auf drei Zustände, nämlich auf die Zustände "Idle", "Waiting for Instructions", "Monitoring"),
- die IN-Protokollmaschine für den Assisting/Hand-Off SSP entfällt,
- die IN-Protokollmaschine für den SCP benötigt nur mehr eine einzige IN-Prozedur für das Feature "User Interaction", die unabhängig von der Lage der intelligenten Peripherals im Netz ist. Nach den bisherigen Verfahren muß der SCP verschiedene Protokollmaschinen unterstützen, je nachdem, ob der IP über die "Relay-Prozedur" (falls der IP am triggernden SSP angeschlossen ist, "co-located IP") oder über die "Assist-Prozedur" (falls der IP nicht am triggernden SSP angeschlossen ist, "remote IP") mit dem SCP kommuniziert.

Im folgenden wird die Erfindung anhand des Nachrichtenflusses bei einem IN-Ruf näher erläutert.

Gemäß der Erfindung werden intelligente Peripherals wie normale ISDN-Teilnehmer ans Netz (N-ISDN und B-ISDN) angeschlossen. Die Vermittlungsstelle, an die ein IP angeschlossen wird, muß daher kein SSP sein. Die Steuerung des IP durch den SCP erfolgt nicht auf indirekte Weise über den SSP, sondern auf direkte Weise über eine separate physikalische Kommunikationsschnittstelle zwischen SCP und IP. Die IN-Prozedur im SSP ist dieselbe, wie für eine Verbindung zu einem B-Teilnehmer und dieselbe für einen co-located IP wie für einen remote IP.

Im SSP werden auf Anweisung des SCP die ANSWER- und DISCONNECT-Meldungen für die Verbindung zwischen User und IP überwacht und dem SCP gemeldet. Die Auslösung der Verbindung wird vom SCP über die direkte Kommunikationsschnittstelle zum IP veranlaßt und vom IP ausgeführt.

Im folgenden wird ein Ausführungsbeispiel der Erfindung anhand der FIG näher erläutert.

Der in der FIG dargestellte IN-Ruf umfaßt vier Phasen, die im folgenden näher erläutert werden:

### Phase 1:

Ein IN-Ruf wird im SSP getriggert. Der SCP weist den SSP daraufhin an, für den User einen Verbindungsaufbau zu einem IP durchzuführen. Die IP-Routing-Adresse, die der SCP dem SSP in der Anweisung zum Verbindungsaufbau übergibt, kann eine nicht wählbare Netzteilnehmeradresse sein, um den IP gegen Belegung durch nicht-IN-Rufe zu schützen. Zusätzlich zur IP-Routing-Adresse übergibt der SCP dem SSP gleichzeitig Korrelationsparameter (correlation-ID, SCF-ID), deren Funktion analog zur IN-Standardprozedur "Assist/Hand-off" ist.

### Phase 2:

In dieser Phase wird der Nutzkanal zwischen Dienstenutzer und IP aufgebaut. Der SCP wird darüber vom SSP benachrichtigt. Die Übertragung der Korrelationsparameter erfolgt im ISDN-UP, kurz ISUP, nicht gemäß Prozeduren wie sie für die IN-Standardprozedur "Assist/Hand-off" gelten. Die Übertragung sollte als Subadresse der IP-Routing-Adresse erfolgen, damit auch eine Übertragung an der Teilnehmerschnittstelle bis zum IP erfolgen kann.

### Phase 3:

In dieser Phase eröffnet der IP über die erfindungsgemäße separate Kommunikationsschnittstelle zwischen SCP und IP eine Steuerbeziehung mit dem SCP ("B-AssistRequestInstructions"). Der SCP weist den IP daraufhin an, wie der Dialog mit dem Dienstenutzer (Service User) zu führen ist ("B-Play/Prompt"). Der IP führt den User-Dialog durch und sendet das Ergebnis schließlich an den SCP ("B-Play/Prompt-Result").

### Phase 4:

Der SCP weist den IP an, den User-Dialog zu beenden ("B-Disconnect"). Der IP löst daraufhin den Nutzkanal aus. Der SSP benachrichtigt den SCP davon ("B-EventReport") und hält gleichzeitig den A-Teilnehmer. Die weitere Behandlung des IN-Rufes kann wie nach einer mit bisherigen Prozeduren realisierten Interaktionsphase erfolgen.

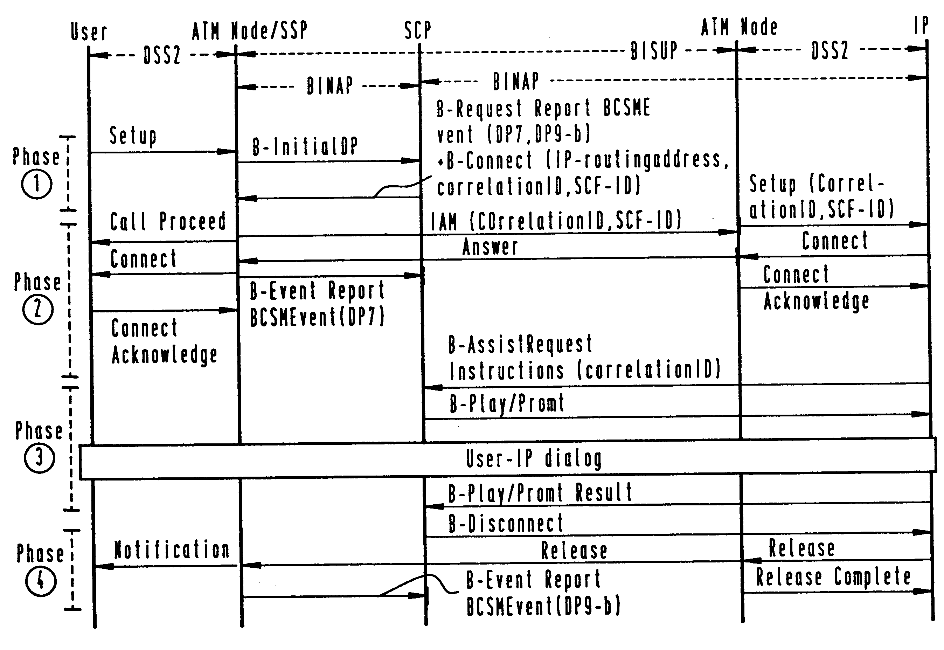

## Patentansprüche

1. Verfahren zur Interaktion eines Teilnehmers mit einem Intelligenten Netz, demgemäß
die Interaktion des IN mit dem Teilnehmer von einem IP durchführt wird, das einem Teilnehmer gleich an das intelligente Netz angeschlossen ist, und
das IP zur Durchführung der Interaktion von einem zentralen Netzknoten (SCP) über eine separate physikalische Kommunikationsschnittstelle gesteuert wird.

2. Intelligentes Peripheral in einem Intelligenten Netz, kurz IN, das im Zusammenhang mit einem IN-Dienst den interaktiven Dialog des IN mit einem Dienstenutzer durchführt und hierzu von einem zentralen Netzknoten (SCP) gesteuert wird,
**dadurch gekennzeichnet,**
daß das IP einem Teilnehmer gleich an das intelligente Netz angeschlossen ist und eine physikalische Kommunikationsschnittstelle umfaßt, über die der SCP das IP auf direkte Weise steuern kann.
